# EUROPEAN PATENT APPLICATION

(11) **EP 2 887 265 A1**
(43) Date of publication of application: **24.06.2015**
(21) Application number: 14199347.7
(22) Date of filing: 19.12.2014
(51) Int. Cl.: G06K 9/00, H04N 21/234, H04N 21/84, H04N 21/854, H04N 21/8549

(54) **Apparatus and method of processing multimedia content**

(30) Priority: 19.12.2013 EP 13306776
(71) Applicant: Thomson Licensing, 92130 Issy-les-Moulineaux (FR)
(72) Inventor: Demarty, Claire-Hélène, 35576 CESSON-SEVIGNE (FR); Penet, Cédric, 35576 CESSON-SEVIGNE (FR); Chamaret, Christel, 35576 CESSON-SEVIGNE (FR)
(74) Representative: Huchet, Anne

(57) **Abstract**

The invention discloses an apparatus and a method of processing a multimedia content. A content processing apparatus 100 includes: a display 116 displaying a multimedia content and associated levels of at least one characteristic of at least two components of the multimedia content; an interface 108 receiving a command for modifying the level of the at least one characteristic of at least one of the components with regard to at least one of the other components; and a processor 102 modifying the at least one of the at least two components according to the level of the at least one characteristic requested by the command.

## Description

### TECHNICAL FIELD

The present inventions relate generally to an apparatus and a method of processing multimedia content and, more particularly, to an apparatus and a method of processing multimedia content including video, audio, text, etc. based on a concept level.

### BACKGROUND ART

Multimedia content provide stimulation to viewers with video, audio, subtitle, etc., and the viewers feel aesthetic sense, pleasantness, unpleasantness, impression, violence, etc.

Film makers may be interested in having an evaluation of some concept levels measured on their content to monitor the targeted effect of their content. As examples of such concepts, one may imagine an aesthetic, violence, etc. Such concept levels may also be interesting for users who try to choose some multimedia content in databases and helpful for users to makes choice of content.

All existing systems and services propose only one concept level to a multimedia content based on the video, or on the audio, or on a mixture of the video and the audio. However, in our knowledge, none proposes a concept level to each of the video and the audio with a certain coherency. This could be of interest either for the film maker or the user trying to make his choice.

### SUMMARY OF THE INVENTION

An object of the present inventions is to provide a useful apparatus and method of processing a multimedia content.

According to an aspect of the present invention, there is provided an apparatus of processing a multimedia content, including: means (350) for displaying a multimedia content and associated levels of at least one characteristic of at least two components of the multimedia content; means (108) for receiving a command for modifying the level of the at least one characteristic of at least one of the components with regard to at least one of the other components; and means (360, 660) for modifying the at least one of the at least two components according to the level of the at least one characteristic requested by the command.

According to another aspect of the present invention, there is provided a method of processing a multimedia content, including the steps of: displaying a multimedia content and associated levels of at least one characteristic of at least two components of the multimedia content; receiving a command for modifying the level of the at least one characteristic of at least one of the components with regard to at least one of the other components; modifying the at least one of the at least two components according to the level of the at least one characteristic requested by the command.

A computer program product comprising program code instructions to execute the steps of the method according to any of the embodiments and variants is disclosed when this program is executed on a computer.

A processor readable medium having stored therein instructions for causing a processor to perform at least the steps of the encoding method according to any of the embodiments and variants is disclosed.

In the specification and claims of the application, the term "concept" means an idea or effect to evaluate the multimedia content. The concept may be, for example, aesthetic sense, pleasantness, unpleasantness, impression, and violence. The term "concept level" means a degree of the concept of the multimedia content. In addition, the term "concept" represents a characteristic of the multimedia content.

### BRIEF DESCRIPTION OF DRAWINGS

These and other aspects, features and advantages of the present invention will become apparent from the following description in connection with the accompanying drawings in which:
FIG. 1 is a block diagram of a configuration of a content processing apparatus according to an embodiment of the present invention;
FIG. 2 is a block diagram showing a functional configuration of the content processing apparatus for determining concept levels of a multimedia content according to the embodiment of the present invention;
FIG. 3 is a block diagram showing a functional configuration of the content processing apparatus for modifying the multimedia content and determining concept levels of the modified multimedia content according to the embodiment of the present invention;
FIG. 4 describes a display of the user interface of the content processing apparatus according to the embodiment of the present invention.
FIG. 5 is a flowchart of a method of content processing according to the embodiment of the present invention; and
FIG. 6 is a block diagram showing a functional configuration of the content processing apparatus for modifying the multimedia content and determining concept levels of the modified multimedia content according to a variant of the embodiment of the present invention.

### DETAILED DESCRIPTION OF THE INVENTION

Hereinafter, preferred embodiments of the present invention will be described referring to the drawings.

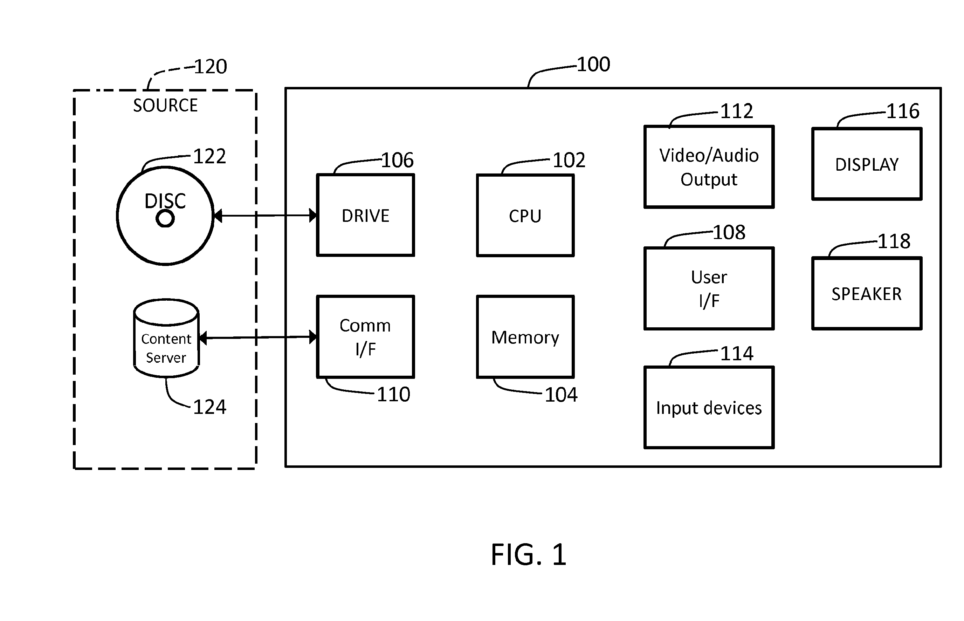

FIG. 1 is a block diagram of a configuration of a content processing apparatus according to an embodiment of the present invention.

Referring to FIG. 1, a content processing apparatus 100 receives a multimedia content from a source 120, determines concept levels of the multimedia content, and modifies the multimedia content. The source 120 may be optical discs 122 such as Blu-ray ™ Disc and DVD which multimedia content are recorded on, or a content server 124 which store database of multimedia content. The materials of multimedia content are, for example, movies, TV programs, musical shows, even a single shot, a rush of for a film, etc. The multimedia content may comprise of a video, an audio, texts, etc. as a content component.

The content processing apparatus 100 is provided with a processor (CPU) 102, a memory 104, a drive 106, a user interface unit 108, a communication interface unit 110, video/audio output 112, and a bus (not shown) connecting these elements. The content processing apparatus 100 is further provided with input devices 114, a display 116, and loudspeakers 118.

The CPU 102 executes programs stored in the memory 104 and performs controls and processes for content processing apparatus 100. The CPU 102 performs processes of multimedia content and processes of providing user interfaces described later.

The memory 104 stores programs and data for executing processes by CPU 102. The programs include programs for processing the multimedia content and providing the user interface.

The drive 106 may include a hard disk drive, a DVD drive, Blu-ray ™ drive, etc. The drive 106 records and plays back the multimedia content and modified multimedia content, and records and reads concept levels of the multimedia content.

The video/audio output 112 is connected with the display 116 and the loudspeakers 118. The video/audio output 112 outputs signals for displaying videos of the multimedia content, the concept levels of the videos and audios of the multimedia content, and software buttons for user inputs on the display 116. The video/audio output 112 outputs signals of the audios of the multimedia content to the loudspeakers 118.

The user interface unit 108 is connected to the input devices 114 such as a keyboard and a mouse. The user interface unit 108 receives signals from the input devices 114 inputted by a user and transmits signals to the CPU 102.

The communication interface unit 110 may be connected with, for example, Ethernet™, Wifi, or optical cables and is not limited to these interfaces. The communication interface unit 110 receives signals including the multimedia content from cable broadcast stations via internet 124 or an optical network.

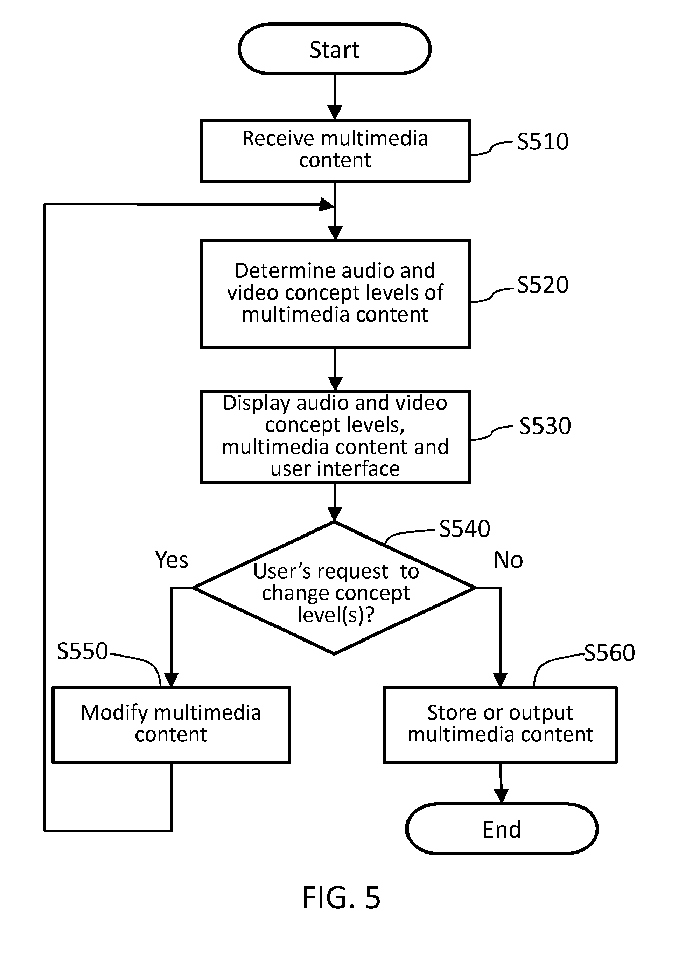

According to an exemplary and non-limitative embodiment of the invention, the content processing apparatus 100 comprises a computer program stored in the memory 104. The computer program comprises instructions which, when executed by a processing device, in particular by the processor 102, make the processing device carry out the method described with reference to FIG. 5. According to a variant, the computer program is stored externally to the content processing apparatus 100 on a non-transitory digital data support, e.g. on an external storage medium such as a HDD, CD-ROM, DVD, a read-only and/or DVD drive and/or a DVD Read/Write drive, all known in the art. The content processing apparatus 100 thus comprises an interface to read the computer program. Further, content processing apparatus 100 could access one or more Universal Serial Bus (USB)-type storage devices (e.g., "memory sticks.") through corresponding USB ports (not shown).

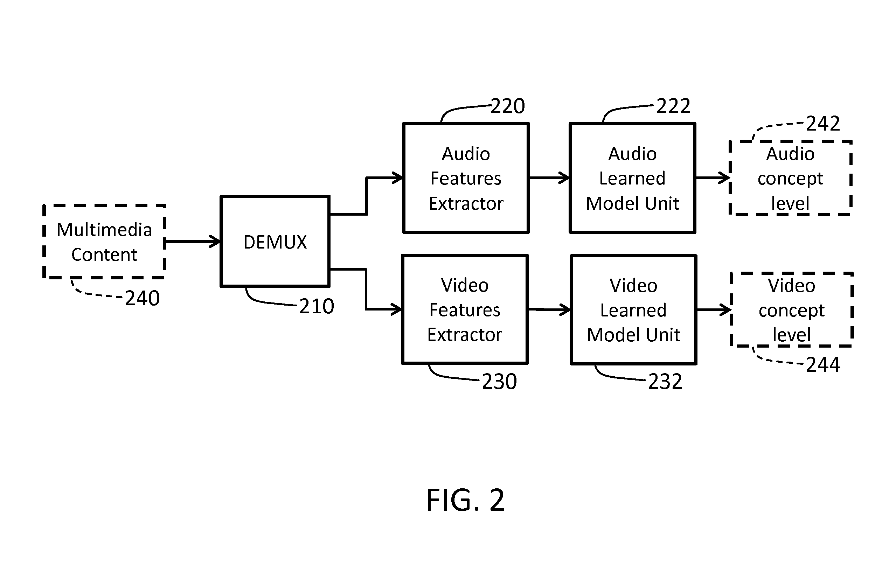

FIG. 2 is a block diagram showing a functional configuration of the content processing apparatus for determining concept levels of a multimedia content according to the embodiment of the present invention;

Referring to FIG. 2, the content processing apparatus 100 is provided with a DEMUX 210, an audio features extractor 220, a video features extractor 230, an audio learned model unit 222, and a video learned model unit 232 as functional configurations for determining concept level of the multimedia content 240. Each of the functional elements in FIG. 2 may be realized by executing the programs stored in the memory 104 by the CPU 102 and by controlling the elements of the content processing apparatus 100 shown in FIG. 1.

The DEMUX 210 receives the multimedia content 240 and disassembles the received multimedia content 240 into content such as an audio content, a video content, subtitles, text data, etc.

For the sake of simplification, it is described hereinafter in the context that only the audio content and the video content are disassembled from the multimedia content by the DEMUX 210 hereinafter. The DEMUX 210 outputs the audio content to the audio features extractor 220 and the video content to the video features extractor 230.

As a variant, if concept levels for the subtitle, the text data, etc. are to be determined, features extractors and the corresponding functions of DEMUX 210 for those may be included in the content processing apparatus 100.

The audio features extractor 220 receives the audio content and extracts one or more audio features related to a concept of which a user wants to determine a level. The one or more extracted audio features are the features in the audio content closely related to the concept level. When the concept is violence, one of potential audio features could be the energy of the audio. The audio features extractor 220 outputs the one or more audio features to the audio learned model unit. 222

The video features extractor 230 receives the video content and extracts one or more video features related to a concept of which a user wants to determine a level. The one or more extracted video features are the features in the video content closely related to the concept level. When the concept is violence, one video feature can be, for example, a frame containing a color of blood, a scene in which a gun is shot, etc. The video features extractor 230 outputs the one or more video features to the video learned model unit 232.

The audio learned model unit 222 receives the one or more audio features and determines a level of concept for the audio (called "audio concept level" hereinafter) from the one or more audio features. The audio learned model unit 222 outputs the determined audio concept level 242. The outputted audio concept level 242 is associated with the original multimedia content 240.

The video learned model unit 232 receives the one or more video features and determines a level of concept for the video (called "video concept level" hereinafter) from the one or more video features. The video learned model unit 232 outputs the determined video concept level 244. The outputted video concept level 244 is associated with the original multimedia content 240.

The audio learned model unit 222 and the video learned model unit 232 may determine the audio concept level 242 and the video concept level 244, respectively by using the existing calculation scheme.

The existing calculation scheme utilizes a previously learned model, i.e. a learning model. The learning model is to accumulate experiences on the concept. For example, it has been clarified that the energy of the audio feature is related to several shots of violence level and that the higher the energy is the higher the violence level is. Thus, to increase or decrease the energy affects the violence level directly. When the concept is violence, the calculation scheme may be found, for example, in Gong et al., Detecting Violent Scenes in Movies by Auditory and Visual Cues, 9th Pacific Rim Conference on Multimedia, NatlCheng Kung Univ. Tainan TAIWAN, DEC 09-13, 2008, pp. 317-326.

The calculation of the concept level may be done over the whole multimedia content or only a part of the multimedia content. The calculation may also be done by detecting a part of the multimedia content with high concept level. When the concept is violence, the scheme for detecting a scene of violence may be known and found, for example, in the above document by Gong et al.

The determined concept level is associated with a scene or shot or frame of the multimedia content as the unit. The multimedia content and the determined audio and video concept levels associated with the multimedia content are stored in the drive 106, the disc 122), or the memory 104.

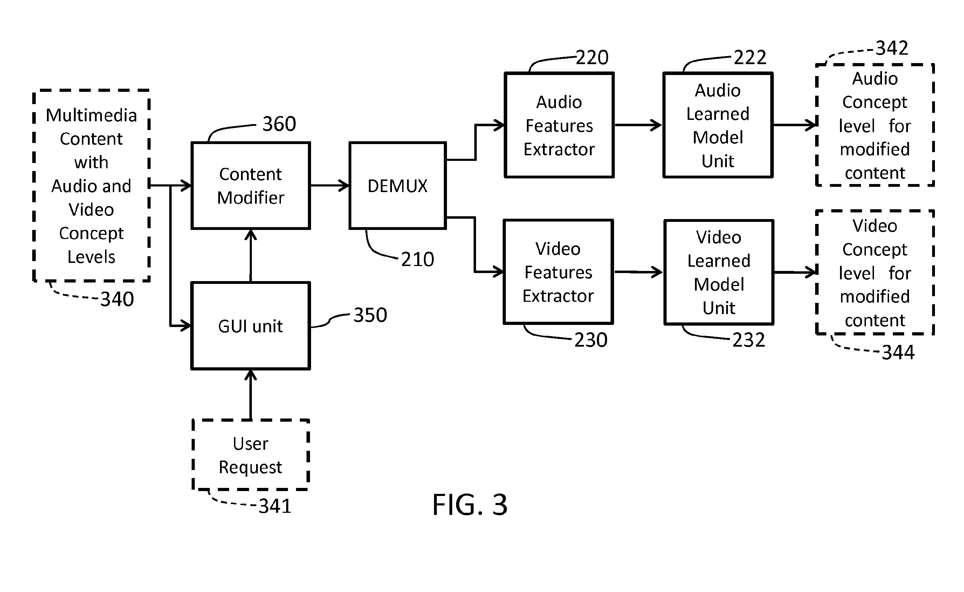

FIG. 3 is a block diagram showing a functional configuration of the content processing apparatus for modifying the multimedia content and determining concept levels of the modified multimedia content according to the embodiment of the present invention.

Referring to FIG. 3, the content processing apparatus 100 is provided with a graphical user interface (GUI) unit 350, a content modifier 360 for modifying the multimedia content, and the elements shown in FIG. 2 for determining concept levels of the modified multimedia content as a functional configuration. The element in FIG. 3 which has the same reference index as the elements in FIG. 2, has the function described above for FIG. 2. Each of the functional elements in FIG. 3 may be realized by executing the programs stored in the memory 104 by the CPU 102 and by controlling the elements of the content processing apparatus 100 shown in FIG. 1.

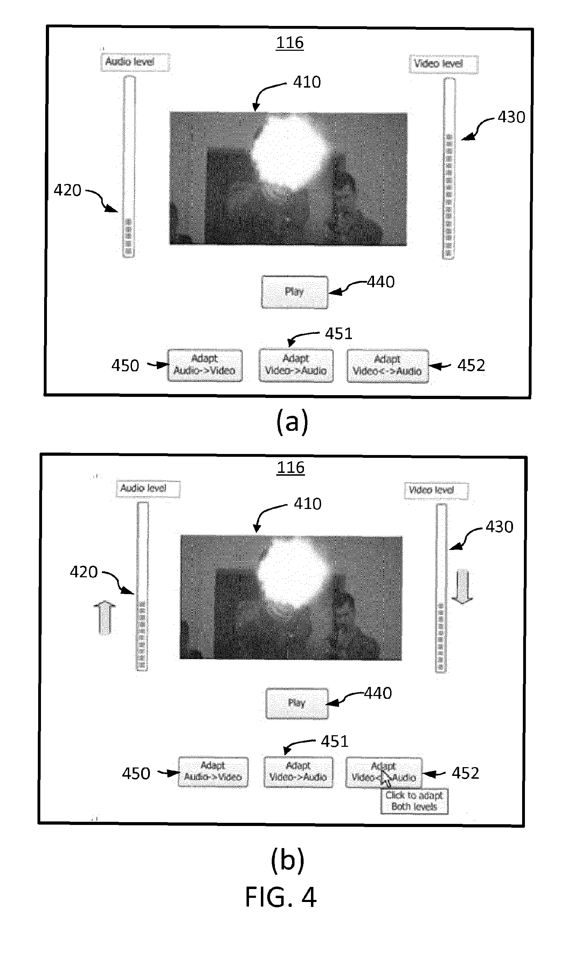

The GUI unit 350 receives the audio and video concept levels and the multimedia content 340 associated with the concept levels and displays those in the display 116. Referring to FIG. 4 (a) which describes a display of the user interface, the GUI unit 350 displays a window 410 which displays the video of the multimedia content, a level indication 420 of the audio concept level, and a level indication 430 of the video concept level, a play back button 440, buttons 450 - 452 for entering a request for changing the concept levels in the display 116.

The GUI unit 350 synchronizes the video with the audio and video concept levels by a scene or shot or frame.

The GUI unit 350 further receives a request of a user for changing the audio and/or video concepts so as to form a desired relation between the audio concept level and the video concept level via the user interface shown in FIG. 4 (a).

An "Adapt Audio->Video" button 450 is for a request for modifying the audio of the multimedia content so as for the audio concept level for the modified audio to match the video concept level.

An "Adapt Video->Audio" button 451 is for a request for modifying the video of the multimedia content so as for the video concept level for the modified video to match the audio concept level.

An "Adapt Video<->Audio" button 452 is for a request for modifying the video and the audio of the multimedia content so as to balance the audio concept level and the video concept level, for example, to change the audio concept level and the video concept level into an balanced level between the audio concept level and the video concept level.

The content modifier 360 receives the multimedia content and the audio and video concept levels associated with the multimedia content. The content modifier 360 modifies the audio and/or video of the multimedia content so as to form the desired relation between the audio concept level and the video concept level in response to the request 341 of the user via the GUI unit 350 and outputs the modified multimedia content to the DEMUX 210.

The content modifier 360 modifies the audio and/or video of the multimedia content so as to change the audio concept level and/or the video concept level in response to the request 341 of the user via the user interface.

When a user clicks the "Adapt Video<->Audio" button 452, the content modifier 360 receives the input via the GUI unit 350. The content modifier 360 compares the audio concept level and video concept level associated with the multimedia content. The content modifier 360 modifies the audio and video of the multimedia content so as to balance the audio concept level and video concept level based on the result of the comparison.

The modifying process will be described below when the concept is violence as an example. The modifying process for the video to decrease the video concept level of the violence is, for example, to suppress and replace violent events by nonviolent events, to suppress visually violent frames, or to suppress violent scenes in the whole multimedia content.

To decrease the video concept level more slightly in the modifying process may be to attenuate blood color with some less violent colors in the frames or to defocus bloodstains and gore. The modifying process for the video to increase the video concept level may be the reverse process of the above examples for decreasing the video concept level.

The modifying process for the audio to decrease the audio concept level of the violence is, for example, to suppress and replace violent events by nonviolent events, or to suppress screams or violent lines of actors and replace them by the silence.

To decrease the audio concept level more slightly in the modifying process may be to decrease loudness (energy of audio) of screams or gunshots, or to decrease loudness of the whole multimedia content. The modifying process for the audio to increase the audio concept level may be the reverse process of the above examples for decreasing the audio concept level.

In addition, the modifying process will be described below when the concept is aesthetics as an example. The modifying process for the video to increase the video concept level of the aesthetics is, for example, the followings. One is to modify the frames so as to have a more harmonized color set. The scheme of this modification may be found, for example, in Y. Baveye et al., "Sailency-Guided Consistent Color Harmonization" (in "Computational Color Imaging" Lecture Notes in Computer Science Volume 7786, 2013, pp 105-118). Another is to move a position of a main object in the frames or to crop all frames so as to fit 'Rule of Thirds' better. 'Rule of Thirds' is well known for video, photograph, and picture composition. Further, another is to increase and/or decrease image blurring in the frames. The modifying process for the video to decrease the video concept level of the aesthetics may be the reverse process of the above examples for increasing the video concept level.

The modifying process for the audio to increase the audio concept level of the aesthetics may be, for example, to increase or decrease the audio energy, or to remove audio noise or background noise by using, for example, source separation or filtering. The modifying process for the audio to decrease the audio concept level of the aesthetics may be the reverse process of the above examples for increasing the audio concept level.

When the content modifier 360 performs the modifying process, the modified multimedia content is outputted to the DEMUX 210 and the audio and video concept level 342, 344 for the modified multimedia content are determined through DEMUX 210 and the downstream function blocks 220, 222, 230, 232 as explained in FIG. 2. The content modifier 360 may perform the modifying process automatically several times until the audio concept level 342 and the video concept level 344 is to be balanced.

The changed audio and video concept levels are displayed in the display 116. FIG. 4 (b) describes increasing the audio concept level and decreasing the video concept level compared to the concept levels described in FIG. 4 (a). The GUI unit 350 plays back the video of the modified multimedia content in the window 410 of the display 116 and plays back the audio of the modified multimedia content from the loudspeakers 118 in response to clicking the play button 440 by a user. The GUI unit 350 displays the level indications 420, 430 of the concept levels in parallel with the playback of the video and/or audio. The user may request more to change the concept levels.

In the user interface shown in FIG. 4 (b), when a user clicks the "Adapt Audio->Video" button 450, the content modifier 360 modifies the audio of the multimedia content so as for to match the video concept level. Specifically, the content modifier 360 compares the audio concept level and video concept level associated with the multimedia content and modifies the audio of the multimedia content for increasing or decreasing the audio concept level based on the result of the comparison so as to match the video concept level.

In the user interface shown in FIG. 4 (b), when a user clicks the "Adapt Video->Audio" button 451, the content modifier 360 modifies the video of the multimedia content so as for to match the audio concept level. Specifically, the content modifier 360 compares the audio concept level and video concept level associated with the multimedia content and modifies the video of the multimedia content for increasing or decreasing the video concept level based on the result of the comparison so as to match the audio concept level.

As a variant, the content processing apparatus 100 may be configured to allow a request for changing the audio and video concept levels into any level, for example, higher audio concept level than the video concept level or the opposite one.

FIG. 5 is a flowchart of a method of content processing according to the embodiment of the present invention.

Referring to FIG. 5, at step S510, the content processing apparatus 100 receives a multimedia content from optical discs 122 or the drive 106 or the content server 124, etc.

Next, at step S520, the content processing apparatus 100 determines the audio and video concept levels of the multimedia. The determination is performed as below, with referring to the description in FIG. 2. The DEMUX 210 disassembles the received multimedia content 240 into the audio content and the video content. Next, the audio features extractor 220 extracts the one or more audio feature related to the concept and the video features extractor 230 extracts the one or more video feature related to the concept. Next, the audio learned model unit 222 determines the audio concept level 242 from the one or more audio feature and the video learned model unit 232 determines the video concept level 244 from the one or more video features.

Next, at step S530, the GUI unit 230 displays the audio and video concept levels, the multimedia associated with the concept levels, and the user interface.

Next, at step S540, the GUI unit 350 determines whether or not the request of a user for changing the audio and/or video concepts so as to form a desired relation between the audio concept level and the video concept level is received. If the GUI unit 350 receives the request ("Yes" atS540), for example, when a user clicks either of the buttons 450 - 452 in FIG. 4, the process goes to S550. If the GUI unit 350 does not receive the request ("No" at S550), the process goes to S560.

Next, at step S550, the content modifier 360 modifies the multimedia content. The modifying process is performed in the schemes by the content modifier 360 as described in FIG. 3.

After the modifying process is performed, returning to S520, the audio and video concept levels 342, 343 of the modified multimedia content are determined.

Next, at S530, the modified multimedia and the audio and video concept levels 342, 343 of the modified multimedia are displayed in the display 116.

Next, at step S540, the GUI unit 350 determines whether or not a further request of the user for changing the audio and/or video concepts is received. If the GUI unit 350 receives the request ("Yes" at S550), the processes S550, 520, and S530 are to be performed as described above. If the GUI unit 350 does not receive the request or the GUI unit 350 receives a request for end of the processes ("No" at S550), the process goes to S560.

At step S560, the content processing apparatus 100 may store the modified multimedia content in the drive 106 or the memory 104. The content processing apparatus 100 may also output the modified multimedia content to external storage devices or content server 124 or next workflow of the multimedia content. Next, the process is ended.

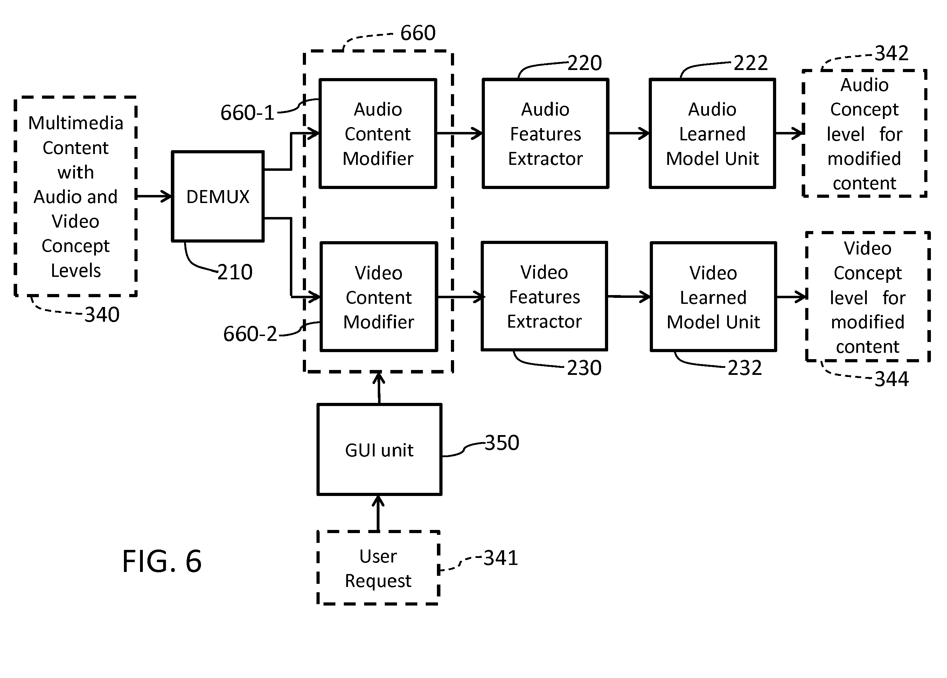

FIG. 6 is a block diagram showing a functional configuration of the content processing apparatus for modifying the multimedia content and determining concept levels of the modified multimedia content according to a variant of the embodiment of the present invention.

Referring to FIG. 6, the content processing apparatus is provided with a GUI unit 650 and a content modifier 660. The content modifier includes an audio content modifier 360-1 and a video content modifier 360-2. The element in FIG. 6 which has the same reference index as the elements in FIG. 2 and FIG. 3, has the function explained above for FIG. 2 and FIG. 3.

In the variant, the modifying process for the multimedia content is performed after the multimedia content is disassembled into the audio and video content at DEMUX 210. The audio content modifier 360-1 modifies the audio content so as to change the audio concept level in response to the request 341 of the user via the GUI unit 350. The video content modifier 360-2 modifies the video content so as to change the video concept level in response to the request 341 of the user via the GUI unit 350. The modifying scheme of the audio and video content for changing the audio and video concepts is the same as described above. The modified audio and video content may be assembled to a multimedia content by a multiplexer (not shown) for storing it in the disc 122 or the drive 106 or for outputting it externally.

It is to be understood that numerous modifications may be made to the illustrative embodiments and that other arrangements may be devised as defined by the appended claims.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. An apparatus of processing a multimedia content, comprising:
means (116) for displaying a multimedia content and associated levels of at least one characteristic of at least two components of the multimedia content;
means (108) for receiving a command for modifying the level of the at least one characteristic of at least one of the components with regard to at least one of the other components; and
means (102) for modifying the at least one of the at least two components according to the level of the at least one characteristic requested by the command.

2. The apparatus according to Claim 1 wherein
said multimedia content can be displayed on a shot basis and said levels correspond to a global level calculated on the shot basis.

3. The apparatus according to Claim 1 or 2 wherein
said at least two components are selected from audio, video and sub-titles.

4. The apparatus according to one of Claims 1 to 3 wherein
said at least one of said at least two components is modified so as to match the levels of the at least one characteristic of the at least two components.

5. The apparatus according to one of Claims 1 to 3 wherein
said at least one of said at least two component is modified so as to balance levels of the at least one characteristic of the at least two components.

6. A method of processing a multimedia content, comprising the steps of:
displaying a multimedia content and associated levels of at least one characteristic of at least two components of the multimedia content (S530);
receiving a command for modifying the level of the at least one characteristic of at least one of the components with regard to at least one of the other components (S540); and
modifying the at least one of the at least two components according to the level of the at least one characteristic requested by the command (S550).

7. The method according to Claim 6, wherein
said multimedia content can be displayed on a shot basis and said levels correspond to a global level calculated on the shot basis.

8. The method according to Claim 6 or 7 wherein
said at least two components are selected from audio, video and sub-titles.

9. The method according to one of Claims 6 to 8 wherein
said at least one of said at least two components is modified so as to match the levels of the at least one characteristic of the at least two components.

10. The method according to one of Claims 6 to 8 wherein
said at least one of said at least two component is modified so as to balance levels of the at least one characteristic of the at least two component.

11. Computer program product downloadable from a communication network and/or recorded on a medium readable by computer and/or executable by a processor, comprising program code instructions for implementing a method according to at least one of claims 6 to 10.

12. Non-transitory computer-readable medium comprising a computer program product recorded thereon and capable of being run by a processor, including program code instructions for implementing a method according to at least one of claims 6 to 10.
